Europäisches Patentamt

European Patent Office

Office européen des brevets

(11) Publication number: 0 315 392 A2

# EUROPEAN PATENT APPLICATION

(21) Application number: 88310212.1

(51) Int. Cl.⁴: **G11B 7/24**

(22) Date of filing: 31.10.88

(30) Priority: 05.11.87 US 116832

(43) Date of publication of application:
10.05.89 Bulletin 89/19

(84) Designated Contracting States:
AT BE CH DE ES FR GB GR IT LI LU NL SE

(71) Applicant: ENERGY CONVERSION DEVICES, INC.
1675 West Maple Road
Troy Michigan 48084(US)

(72) Inventor: Strand, David
2091 Daintree
West Bloomfield Michigan 48033(US)
Inventor: Gasiorowski, Paul
13849 Heritage
Sterling Heights Michigan 48077(US)

(74) Representative: Jackson, Peter Arthur et al
GILL JENNINGS & EVERY 53-64 Chancery Lane
London WC2A 1HN(GB)

(54) Data storage device having an encapsulated phase change memory medium and means for suppressing ablation thereof.

(57) An optical data storage device (1) having an encapsulated optical data storage medium (31). The optical data storage medium (31) is subject to ablation both within the medium and at its interface with the encapsulant (21), and is provided with ablation suppressing means.

FIG. 1

EP 0 315 392 A2

# DATA STORAGE DEVICE HAVING AN ENCAPSULATED PHASE CHANGE MEMORY MEDIUM AND MEANS FOR SUPPRESSING ABLATION THEREOF

The invention disclosed herein relates to data storage devices, where data is stored in an encapsulated phase change material that is switchable between detectable states by the application of projected beam energy thereto, which encapsulated phase change material is subject to ablation, especially micro-ablation, i.e., sub-micron scale ablation, when switching. According to the claimed invention means are provided to suppress the tendency of the encapsulated memory material to undergo ablation.

One type of non-ablative state changeable data storage systems, phase change optical data storage systems, record information in a state changeable material that is switchable between at least two detectable states by the application of projected beam energy thereto, for example, optical energy.

State changeable data storage material is incorporated in a data storage device having a structure where the data storage material is supported by a substrate and encapsulated in encapsulants. The encapsulants include, for example, anti-ablation materials and layers, thermal insulation materials and layers, anti-reflection materials and layers, reflective layers, and chemical isolation layers. Moreover, various layers may perform more than one of these functions. For example, anti-reflection layers may also be anti-ablation layers and thermal insulating layers. The thicknesses of the layers, including the layer of state changeable data storage material, are optimized to minimize the energy necessary for state change and optimize the high contrast ratio, high carrier to noise ratio, and high stability of state changeable data storage materials.

While the state changeable material may be encapsulated in, for example, anti-ablation materials, which avoid the gross, bit or pixel size ablation on the order of 0.1 to 10 microns, the data storage material is still subject to ablation. In phase change systems the ablation is most frequently micro-ablation. Micro-ablation is characterized by sub-micron scale bubbles, pits, and delamination.

These sub-micron scale bubbles, pits, and delamination sites are on the order of tens of Angstroms to about 5000 or more Angstroms. The result of the sub-micron micro ablation is a loss in differentiation between "0" and "1" states. This loss in differentiation between "0" and "1" results in low carrier to noise ratio, a low contrast ratio, and high bit error rate. These problems are present in both "write once" systems and in "reversible" or "erasable" systems.

The state changeable material which is intended for phase change recording, and not for ablative recording, is a material capable of being switched from one detectable state to another detectable state or states by the application of projected beam energy, as optical energy, thereto. State changeable materials are such that the detectable states thereof may differ in morphology, surface topography, relative degree of order, relative degree of disorder, electrical properties, and optical properties including absorption coefficient, indices of refraction, and reflectivity, or combinations of one or more of these properties. The state of state changeable material is detectable by the electrical conductivity, electrical resistivity, optical transmissivity, optical absorption, optical refraction, optical reflectivity, or combinations thereof.

Formation of the data storage device includes deposition of the individual layers, for example by evaporative deposition, chemical vapor deposition, and/or plasma deposition. As used herein plasma deposition includes sputtering, glow discharge, and plasma assisted chemical vapor deposition.

The phase change materials are typically chalcogens, as Se and Te, with significant contents of Group IVA metals (Ge,Sn), Group VA metals (As, Sb, and Bi) and other additives. Exemplary chalcogenides include TeSeSb, InSe, InSeTl, TeGeSnAu,, TePdO, and TeGeSn, among others, which enumeration is by way of illustration and not limitation. Non-chalcogen phase change memory materials include, also solely be way of illustration, InSb, and GaSb. Most commonly tellurium based materials have been utilized as state changeable materials for data storage where the state change is a structural change evidenced by a change in reflectivity. This effect is described, for example, in J. Feinleib, J. deNeufville, S.C. Moss, and S.R. Ovshinsky, "Rapid Reversible Light-Induced Crystallization of Amorphous Semiconductors," Appl. Phys. Lett., Vol. 18(6), pages 254-257 (March 15, 1971). A recent description of tellurium-germanium-tin systems, without oxygen, is in M. Chen, K.A. Rubin, V. Marrello, U.G. Gerber, and V.B. Jipson, "Reversibility And Stability of Tellurium Alloys for Optical Data Storage," Appl. Phys. Lett., Vol. 46(8), pages 734-736 (April 15, 1985). A recent description of tellurium-germanium-tin systems with oxygen is in M. Takenaga, N. Yamada, S. Ohara, K. Nishiciuchi, M. Nagashima, T. Kashibara, S. Nakamura, and T. Yamashita, "New Optical Erasable Medium Using Tellurium Sub-oxide Thin Film," Proceedings, SPIE Conference on Optical Data Storage, Arlington, VA, 1983, pages 173-177.

Reversible phase changeable materials, in general, are single or multi-phased systems where (1) ordering phenomena include a nucleation and growth process (including both or either homogeneous and heterogeneous nucleations) to convert a system of disordered materials to a system of ordered and disordered materials, and (2) the vitrification phenomena, when utilized include melting and rapid quenching of the phase changeable material to transform a system of disordered and ordered materials to a system of largely disordered materials. The above phase changes and separations occur over relatively small distances, with intimate interlocking of the phases and gross structural discrimination, and can be highly sensitive to local variations in stoichiometry, heat transfer rates, temperature, and surface properties at interfaces between the phase change material and the encapsulating layers.

A serious limitation of reversible systems is a gradual increase in the error rate over many cycles. In the course of making this invention, it was found that an increase in error rate can be correlated with the onset of ablation, especially sub-micron scale ablation. Ablation includes the formation of bubbles and voids, e.g., sub-micron scale bubbles and voids and the occurrence of delamination effects, e.g., sub-micron scale delamination effects at the data storage medium-encapsulant interface.

An important operational aspect of this problem is that these effects significantly increase the error rate with increasing cycle life. In prior art reversible systems, increased error rate has been identified with a loss of reversibility and a reduced cyclability. This has severely limited the acceptability of reversible optical data storage systems.

According to the invention herein contemplated there is provided a method and apparatus for suppressing the tendency to form scale ablative defects, especially sub-micron scale ablative defects, both within the phase change material and at the phase change material-encapsulant interface. This reduction in ablative defects and voids, especially sub-micron scale ablative defects and voids result in a lower error rate, and, in the case of reversible systems, a longer cycle life. The invention described herein provides an optical data storage device comprising an encapsulated phase change optical data storage medium having means to suppress ablation especially sub-micron scale ablation, e.g., at the data storage medium-encapsulant interface and within the data storage medium.

According to the invention there is provided a phase change optical data storage device comprising an encapsulated phase change optical data storage medium including means for suppressing ablation, e.g., sub-micron scale ablation. The means for suppressing ablation include means within the encapsulating layer, e.g., to modify or alter one or more of the chemistry, structure, or chemical affinity, or surface means on the surface of the encapsulating layer to modify or alter one or more surface properties thereof, such as the chemical affinity for the data storage material, the surface tension, or the structure thereof, or on or in the thin film of phase change material for modifying or altering the chemistry, structure, chemical affinity, chemical reactivity, and/or surface tension thereof. These alterations and modifications of the chemistry, structure, chemical reactivity, and/or chemical affinity of one or more of the encapsulating layers, of the phase change materials, or the interface therebetween reduce the tendency towards micro-ablation at said interface or within the bulk of the phase change material. The expedients may take the form of encapsulants other than inorganic dielectrics, e.g. polymeric encapsulants, as organic polymeric encapsulants, polymeric organic fluorocarbon encapsulants, polymeric silicone encapsulants, and polymeric siloxane encapsulants. Alternatively, the tendency to ablation, e.g., sub-micron scale ablation, may be suppressed by modifying or altering the fluid properties of thin film of phase change material. This may be accomplished by increasing the effective or apparent viscosity of the thin film of phase change material.

According to the invention, not only may the optical reflectivities and optical absorptions of each state of the phase change recording medium be tailored to provide an optimal combination of contrast ratio, carrier to noise ratio, and where applicable, cycle life, but now, according to the present invention, the surface and fluid properties of the thin film of phase change material and/or of the encapsulant may also be tailored so as to suppress the tendency to ablation at the interfacial region therebetween and within the phase change material, thereby to lessen error formation, and, in reversible systems, to increase the cycle life.

In a further exemplification, one or more of writing data into a data storage device, reading data out of the data storage device, or erasing data from the data storage device is performed. The method comprises writing data into the data storage medium with electromagnetic energy of a first energy density and duration, reading the state of the data storage medium with electromagnetic energy of a second energy density and duration, and, optionally entering new data into the data storage medium all with the substantial avoidance of ablation.

The invention may be particularly understood by reference to the drawings appended hereto, in which:-

Figure 1 is a partial cut away isometric view, not to scale, with exaggerated latitudinal dimensions and vertical scale, of an optical data storage device.

Figure 2 is a detailed section of the part of the optical data storage device of Figure 1 showing the relationship of the various layers thereof.

According to the invention described herein, there is provided an optical data storage method and apparatus utilizing a phase change data storage medium switchable between detectable states by the application of projected beam energy, an electro magnetic energy in the visible spectrum, thereto.

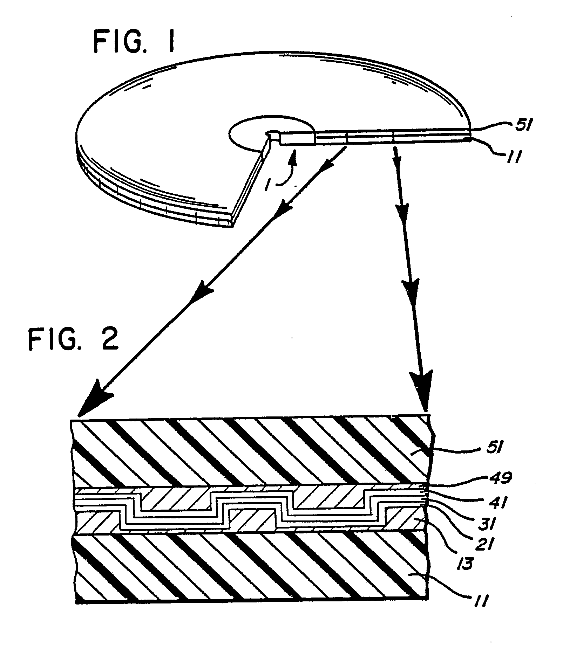

Figures 1 and 2 show a projected beam data storage device, i.e., an optical data storage device, 1 having a substrate, for example a plastic substrate 11, a first encapsulating layer 21, for example a first polymeric encapsulating layer, a chalcogenide phase change compound data storage medium layer 31, a second encapsulating layer 41, for example, a second polymeric encapsulating layer 41, and, optionally, a second substrate, for example, plastic substrate 51.

Figure 2 shows a section of the data storage device 1 of Figure 1 in greater detail. As there shown, the substrate 11 is a polymeric sheet, for example a polymethyl methacrylate sheet. The substrate 11 is an optically invariant, optically isotropic, transparent sheet. The preferred thickness is of from about 1 mm to about 1.5 mm.

Atop the substrate 11 may be a film, sheet, or layer 13, e.g., a polymerized acrylic sheet.

Grooves may be polymerized, molded, injection molded, or cast into the polymeric sheet 13. Alternatively, the grooves may be in the substrate 11, in which case the film, sheet, or layer 13 may be omitted. When grooves are present they may have a thickness from about 500 to about 1000 Angstroms. The film, sheet, or layer 13 may act as an adhesive, holding the substrate 11 to the encapsulants. The film, sheet, or layer 13 has a thickness of from about 30 to about 200 microns and preferably from about 50 to about 100 microns.

An encapsulating layer 21 is deposited atop the polymerized sheet 13. The encapsulating layer 21, for example, of siloxane polymer with a carbon to silicon ratio of from about 1:25 to 1:5 and generally about 1:10, is from about 500 to about 2000 angstroms thick. Preferably the encapsulating layer 21 has an optical thickness of either one-quarter or three-quarter times the laser wavelength times the index of refraction of the material forming the encapsulating layer 21. The encapsulating layer 21 has one or more functions. It serves to prevent oxidizing agents from getting to the phase change layer, typically a chalcogen active layer 31 and to prevent the plastic substrate from deforming due to local heating of the phase change layer 31, e.g., during recording or erasing. The encapsulating layer 21 also serves as an anti-reflective coating, increasing the optical sensitivity of the chalcogenide active layer 31. Finally, in one preferred embodiment of the invention the encapsulating layer 21 provides low surface tension means for preventing ablation, as micro-ablation, of the data storage material active layer 31.

Various polymers and dielectrics may provide the encapsulating layers 21, 41. For example, the encapsulating layers 21, 41 may be silicon nitride, layered or graded to avoid diffusion of silicon into the chalcogenide layer 31. Alternatively, the encapsulating dielectric layers 21, 41 may be silica, alumina, silicon nitride, or other dielectrics, organic polymers, fluorinated organic polymers, or silicone polymers, as organic polysiloxane polymers.

The data storage medium active layer 31 has an optical thickness of one half of the laser wavelength times the index of refraction of the data storage material, i.e., about 800 Angstroms. Atop the thin film of the optical data storage medium 31 and in contact with the opposite surface thereof is a second encapsulating layer 41, e.g., as a polymeric layer. The second encapsulating layer 41 may, but need not, be of the same thickness as the first layer 21. Preferably it has a thickness of one half times the laser wavelength times the index of refraction. A second polymer layer 49 and a second substrate layer 51 may be in contact with the opposite surface of the encapsulating layer 41. Alternatively an air sandwich structure may be utilized. In a still further alternative the encapsulating layer 41 may be unprotected and directly exposed to the environment.

The polyacrylate layers 13, 49, when present, are cast or molded in place. These layers 13, 49 can be photo-polymerized in place, e.g., by the application of ultra-violet light. The encapsulating layers 21, 41, are deposited, by evaporation, by sputtering, including reactive sputtering where the content of the reactive gas used in reactive sputtering is controlled, by in situ polymerization, or by spin coating.

The thin film optical data storage active layer 31 may be prepared by evaporation, or by sputtering, or by chemical vapor deposition. Exemplary optical data storage materials include chalcogenides, such as chalcogenides TeSeSb, InSe, InSeTl, TeGeSnAu, TePdO, and TeGeSn, among others, which enumeration is by way of illustration and not limitation. Non-chalcogen phase change memory materials include, also solely be way of illustration, InSb, and GaSb.

In an alternative exemplification the non-ablative, phase change memory material 31 is a high viscosity thin film, for example a film containing a viscosity increasing agent. This agent may be a dispersion or sol of a substantially inert, insoluble dielectric. The dispersed phase should be submicron in size and capable of forming both a solid in solid sol and a solid in liquid sol with the data storage material. Exemplary dielectrics include $SiO_2$, $TiO_2$, $TeO_2$, $GeO_2$, $SnO_2$, and $Si_3N_4$. The dispersed dielectric allows the data storage layer to be changed from a solid in solid sol of first atomic order to a solid in liquid sol and thence to a solid in solid sol of second atomic order by, e.g., the application of projected beam energy, as a laser, thereto.

The problem of an increased tendency to micro-ablation is particularly severe in tellurium oxide thin films containing a phase change accelerant or catalyst, for example, a crystallization accelerant . Exemplary are films of the type:

$(Te_xO_{1-x})_{100-a}$ $(Te_yM_{1-y})_a$ where M is an accelerant or catalyst. e.g., a crystallization accelerant or catalyst, x and y are independently from about 0.25 to 0.75, and a is from about 0.10 to 0.95, with x, y, and a being optimized with respect to crystallization speed, contrast ratio, and carrier to noise ratio, inter alia.

M, the accelerant , may be a transition metal. The preferred transition metals for the accelerant are the transition of Group VIII, i.e., Fe, Co, Ni, Ru, Rh, Pd, Os, Ir, Pt and mixtures thereof, with Ni, Pd, and Pt especially preferred as phase change accelerants and initiators. One class of especially preferred phase change materials are those of the type.

$(Te_xO_{1-x})_{100-a}$ $(Te_yM_{1-y})_a$

where M is chosen from the group consisting of Ni, Pd, Pt, and mixtures thereof, x is from about 0.25 to about 0.80, y is from about 0.25 to about 0.75, and a is from about 10 to 50. Within this class, tellurium-palladium-oxygen alloys of the composition range

$(Te_xO_{1-x})_{100-a}$ $(Te_yPd_{1-y})_a$

where x is from about 0.45 to 0.80, and especially about 0.45, y is from 0.25 to 0.75, and especially from 0.33 to 0.50, and a is from about 10 to 50 and especially from 15 to 25 are especially preferred. While alloys within this composition range have a very high switching speed, and therefore require less time to crystallize, they are also much more susceptible to ablation then accelerant free optical data storage media. It is believed that the accelerant increases the tendency to ablation.

One expedient I have found to avoid ablation is a thin coating on the substrate, which coating modifies the surface thereof to reduce the tendency to ablation. In one embodiment this takes the form of a silicon glass coating.

I have found that the glass coating may be deposited by various techniques including vacuum and plasma techniques. One that is especially amendable to large volume industrial implementation is starting with a deposit of an organo-siloxane, as polymethyl siloxane, and curing to a high silica content. This may be accomplished by spin-coating a polymer having inorganic and organic moities onto the substrate and/or onto the thin film of phase change material. Another alternative amendable to large volume industrial implementation is vacuum evaporation.

Alternatively, the encapsulant may be a polymeric film. Suitable polymers are the silicones, including organo-silanes and organo-siloxanes. According to this exemplification, there is provided an optical data storage device comprised of a substrate of thickness of from about 1 to 1.5 millimeter thick, a silicone film, as described above, of above 500 to 2000 angstroms thick, a phase change material thin film, exemplified by a tellurium-palladium-oxygen or In-Sb or Ga-Sb, about one half the intended laser length (e.g., about 1000 angstroms) times the optical index of refraction thereof (about 4), and a second silicone encapsulating layer about 500 to 2000 angstroms thick.

In a further exemplification of the invention, one or more of writing data into a data storage device, reading data out of the data storage device, or erasing data from the data storage device is performed. The method comprises writing data into the data storage medium with electromagnetic energy of a first energy density and duration, reading the state of the data storage medium with electromagnetic energy of a second energy density and duration, and optionally, writing new data into the data storage medium with electromagnetic energy of a proper energy density and duration, for example of the same energy density and duration, while avoiding ablation of the data storage layer 31.

It should be understood that the present invention is not limited to the precise structure illustrated in the described embodiments. It is intended rather that foregoing descriptions of the presently preferred embodiments be regarded as illustrative rather than as a limitation of the present invention. It is therefore the following claims, including all equivalents, which define the scope of the instant invention. Thus, it is possible to effect minor changes to the embodiments of the present invention without departing from the spirit or scope of the invention.

## Claims

1. An optical data storage device (1) comprising:
a thin film optical data storage medium (31) adapted to store data by a change from a state of a first atomic order to a state of a second atomic order, a substrate (11) supporting said optical data storage medium (31), a polymeric layer (21) encapsulating said :o optical data storage medium (31), said optical data storage medium (31) being subject to ablation at interfaces with said encapsulant (21), and means for suppressing said ablation, the improvement being characterized in that the polymeric layer encapsulating (21) the optical data storage medium (31) is an organo polysiloxane polymeric layer comprising polymethyl siloxane.

2. The optical data storage device (1) of Claim 1 comprising means for reducing surface tension between the optical data storage medium (31) and the encapsulant (21) thereby suppressing the ablation.

3. The optical data storage device (1) of Claim 2 comprising a low surface tension dielectric encapsulating the phase change optical data storage material (31).

4. The optical data storage device (1) of Claim 3 comprising an $SiO_2$ low surface tension dielectric encapsulating the phase change optical data storage material (31).

5. The optical data storage device (1) of Claim 1 wherein the optical data storage medium (31) is a multi-phase material comprising a phase change material and at least one high melting phase, substantially insoluble in and nonreactive with molten phase change material, said data storage medium (31) being switchable from a solid-solid sol to a high viscosity solid-liquid sol.

6. The optical data storage device (1) of Claim 5 wherein the optical data storage medium (31) is switchable from a first solid-solid sol through a high viscosity second solid-liquid sol to a second solid-solid sol.

7. The optical data storage device (1) of Claim 5 wherein the data storage medium (31) is switchable from a solid-solid sol of a first atomic order through a high viscosity solid-liquid sol state, to a solid-solid sol of a second atomic order.

8. The optical data storage device (1) of Claim 5 wherein the high melting phase includes dispersed, sub-micron, dielectric particles which comprise a dielectric chosen from the group consisting of $SiO_2$, $TiO_2$, $TeO_2$, $GeO_2$, $SnO_2$, $Si_3N_4$.

9. The optical data storage device (1) of Claim 1 wherein the optical data storage medium (31) comprises a chalcogen chosen from the group consisting of selenium, tellurium, and mixtures thereof.

10. The optical data storage device (1) of Claim 9 wherein the chalcogen is tellurium.

11. The optical data storage device (1) of Claim 10 wherein the optical data storage medium (31) has the composition $(Te_xO_{1-x})_{100-a} (Te_yM_{1-y})_a$ where

M is a crystallization accelerant chosen from the group consisting of Fe, Co, Ni, Ru, Rh, Pd, Os, Ir, Pt, and mixtures thereof, x is from 0.25 to 0.75, y is from 0.25 to 0.75, and a is from 10 to 95.

12. The optical data storage device (1) of Claim 11 wherein M is chosen from the group consisting of Ni, Pd, and Pt, x is from 0.45 to 0.80, y is from 0.25 to 0.75, and a is from 10 to 50.

13. The optical data storage device (1) of Claim 1 wherein the optical data storage medium (31) is chosen from the group consisting of InSb and GaSb.

FIG. 1

51
11

FIG. 2

51
49
41
31
21
13
11